# EUROPEAN PATENT APPLICATION

(11) **EP 4 693 434 A1**
(43) Date of publication of application: **11.02.2026**
(21) Application number: 24814294.5
(22) Date of filing: 23.05.2024
(51) Int. Cl.: H01M 4/13, H01M 4/139, H01M 4/66, H01M 10/0525

(54) **COMPOSITE POLE PIECE AND PREPARATION METHOD THEREFOR, BATTERY CELL AND PREPARATION METHOD THEREFOR**

(30) Priority: 26.05.2023 CN 202310611531
(71) Applicant: Sichuan Advanced Industrious Material Tech Co., Ltd., Chengdu, Sichuan 611500 (CN)
(72) Inventor: ZHANG, Lei, Chengdu, Sichuan 611500 (CN); XU, Qiang, Chengdu, Sichuan 611500 (CN); YANG, Haotian, Chengdu, Sichuan 611500 (CN); LI, Jianting, Chengdu, Sichuan 611500 (CN); DIAO, Jiangao, Chengdu, Sichuan 611500 (CN); LIU, Dongren, Chengdu, Sichuan 611500 (CN)
(74) Representative: Gonella, Mario
(86) International application number: PCT/CN2024/094948
(87) International publication number: WO 2024/245095

(57) **Abstract**

The present invention relates to the technical field of batteries, in particular to composite pole pieces and a preparation method therefor, and battery cells and a preparation method therefor. The composite pole piece comprises a composite current collector, a positive electrode material layer, and a negative electrode material layer. The composite current collector comprises an insulating layer, a positive electrode conductor layer, and a negative electrode conductor layer; a first surface of the insulating layer is provided with the positive electrode conductor layer, and a second surface of the insulating layer is provided with the negative electrode conductor layer; the positive electrode material layer is arranged on a surface, away from the insulating layer, of the positive electrode conductor layer; the negative electrode material layer is arranged on a surface, away from the insulating layer, of the negative electrode conductor layer; the width of the insulating layer ≥ the width of the positive electrode conductor layer ≥ the width of the positive electrode material layer; and the width of the insulating layer ≥ the width of the negative electrode conductor layer ≥ the width of the negative electrode material layer. The composite pole piece of the present invention can solve the problem that an alignment degree is difficult to control in high-speed preparation of battery cells, and thereby improves manufacturing speed and optimal rate, so that it can be guaranteed that the battery cells have high safety performance and electrochemical performance.

## Description

### CROSS REFERENCE TO RELATED APPLICATION

The present invention claims the priority to the Chinese patent application with the filing No. 2023106115313 filed with the Chinese Patent Office on May 26, 2023, and entitled "COMPOSITE POLE PIECE AND PREPARATION METHOD THEREFOR, BATTERY CELL AND PREPARATION METHOD THEREFOR".

### TECHNICAL FIELD

The present invention relates to the technical field of battery, and in particular to a composite electrode sheet (pole piece) and a preparation method thereof, a battery cell and a preparation method thereof.

### BACKGROUND

In the prior art, a manufacturing process of battery cells has the drawbacks as follows.

The battery cells with a wound-type structure use a winding needle to wind a four-layer structure of separator 1/positive electrode sheet/separator 2/negative electrode sheet, then flatten and shape it. The TD direction of the winding of the negative electrode sheet must extend beyond the positive electrode sheet on both sides, and the separator 1 and the separator 2 must extend beyond the negative electrode sheet. The alignment accuracy of these components is ±0.5mm, and it is difficult to control alignment during high-speed winding. Furthermore, the wound core needs to be moved in subsequent processes, which can easily cause relative movement of the positive and negative electrodes and the separators, resulting in alignment that does not meet manufacturing requirements.

The manufacturing process for battery cells with a stacked-type structure repeats the following steps: placing the negative electrode sheet, placing the separator, placing the positive electrode sheet, placing the separator, and placing negative electrode separator. The negative electrode sheet must extend beyond the positive electrode sheet on all sides, and the separator must extend beyond the negative electrode sheet after placement. The alignment accuracy requirement for these components is also ±0.5mm, making it difficult to control alignment during the stacking process. Furthermore, the stacked wound core needs to be moved in subsequent processes, which can easily cause relative movement of the positive and negative electrodes and the separators, resulting in alignment that does not meet manufacturing requirements.

During the winding and stacking process, two types of units must be prefabricated: positive electrode/separator/negative electrode/separator/positive electrode and negative electrode/separator/positive electrode/separator/negative electrode. Both units require hot-pressing laminating the positive and negative electrodes with the separator in advance, and strict alignment is required between each component.

Therefore, it is difficult to control the alignment problem of battery cells during high-speed preparation in the prior art. Moreover, the subsequent movement of the battery cells will cause the positive electrode and the negative electrode and the separator to move relative to each other, resulting in alignment that does not meet the requirements. In addition, the conventional current extraction method in the battery cells is prone to cause the positive electrode and the negative electrode to be conductive, which in turn poses a safety hazard to the battery cells.

### SUMMARY

The present invention provides a composite electrode sheet including a composite current collector, a positive electrode material layer, and a negative electrode material layer. The composite current collector includes an insulating layer, a positive electrode conductor layer, and a negative electrode conductor layer. The positive electrode conductor layer is disposed on a first surface of the insulating layer, and the negative electrode conductor layer is disposed on a second surface of the insulating layer. The positive electrode material layer is disposed on a surface of the positive electrode conductor layer away from the insulating layer; and the negative electrode material layer is disposed on a surface of the negative electrode conductor layer away from the insulating layer. A width of the insulating layer ≥ a width of the positive electrode conductor layer ≥ a width of the positive electrode material layer; and the width of the insulating layer ≥ a width of the negative electrode conductor layer ≥ a width of the negative electrode material layer.

In some embodiments, a projection of the positive electrode material layer is located within an area of the insulating layer. A first end of the positive electrode conductor layer along its width direction is aligned with a first end of the insulating layer, and a second end of the positive electrode conductor layer along its width direction is aligned with a second end of the insulating layer or aligned with the positive electrode material layer. A surface of the positive electrode conductor layer has a first reserved area for connecting a first external conductor.

In some embodiments, a projection of the negative electrode material layer is located within the area of the insulating layer. A first end of the negative electrode conductor layer along its width direction is aligned with a second end of the insulating layer, and a second end of the negative electrode conductor layer along its width direction is aligned with the first end of the insulating layer or aligned with the negative electrode material layer. A surface of the negative electrode conductor layer has a second reserved area for connecting a second external conductor.

In some embodiments, the first reserved area is connected to the first external conductor; and the second reserved area is connected to the second external conductor. The first external conductor and the second external conductor are both parallel to the negative electrode material layer.

In some embodiments, the first reserved area is connected to the first external conductor, and the second reserved area is connected to the second external conductor. The first external conductor and the second external conductor are both perpendicular to the negative electrode material layer, and the first external conductor and the second external conductor are arranged face-to-face.

In some embodiments, a material of the first external conductor includes at least one of aluminum and stainless steel.

In some embodiments, a material of the second external conductor includes at least one of copper and nickel.

In some embodiments, a thickness of the insulating layer is 1 to 10 µm.

In some embodiments, the positive electrode conductor layer includes at least one of a first metal conductive foil and a first conductive plating layer.

In some embodiments, a thickness of the positive electrode conductor layer is 0.5 µm to 10 µm.

In some embodiments, the positive electrode material layer includes a positive electrode active material, wherein the positive electrode active material includes at least one of lithium cobalt oxide, lithium iron phosphate, lithium manganese iron phosphate, lithium manganese oxide, a ternary positive electrode material, Prussian blue, sodium iron phosphate, sodium vanadium fluorophosphate, sodium vanadium phosphate, and NaₓMO₂, where M in NaₓMO₂ is a transition metal element.

In some embodiments, a surface of the positive electrode conductor layer has a concave structure.

In some embodiments, the negative electrode conductor layer includes at least one of a second metal conductive foil and a second conductive plating layer.

In some embodiments, a thickness of the negative electrode conductor layer is 0.5 to 8 µm.

In some embodiments, the negative electrode material layer includes a negative electrode active material, wherein the negative electrode active material includes at least one of graphite, hard carbon, and lithium titanate.

In some embodiments, a first bonding layer is further disposed between the positive electrode conductor layer and the insulating layer.

In some embodiments, a second bonding layer is further disposed between the negative electrode conductor layer and the insulating layer.

In some embodiments, a thickness of both the first bonding layer and the second bonding layer is 0.2 to 2 µm.

In some embodiments, a first carbon glue layer is further disposed between the positive electrode conductor layer and the positive electrode material layer.

In some embodiments, a second carbon glue layer is further disposed between the negative electrode conductor layer and the negative electrode material layer.

In some embodiments, both the first carbon glue layer and the second carbon glue layer include a conductive carbon material and a binder; and a mass ratio of the conductive carbon material to the binder is (0.8-1):(0.8-1).

The present invention provides a preparation method for the composite electrode sheet, including the following steps:
(a) preparing the composite current collector, wherein the composite current collector includes the insulating layer, the positive electrode conductor layer, and the negative electrode conductor layer;
(b) preparing the positive electrode material layer on the surface of the positive electrode conductor layer, wherein a preparation of the positive electrode material layer includes: laminating the positive electrode conductor layer with a positive electrode material sheet in a first hot-pressing process, or coating the surface of the positive electrode conductor layer with a positive electrode slurry;
(c) preparing the negative electrode material layer on the surface of the negative electrode conductor layer, wherein a preparation of the negative electrode material layer includes: laminating the negative electrode conductor layer with a negative electrode material sheet in a second hot-pressing process, or coating the surface of the negative electrode conductor layer with a negative electrode slurry,
wherein, step (b) and step (c) can be performed in any order.

In some embodiments, the preparation method for the positive electrode material sheet specifically includes: performing a first stirring process on a mixture of a positive electrode conductive agent and a positive electrode binder under heating conditions, followed by a first airflow milling process to obtain a first material; performing a second stirring process on a mixture of the first material and a positive electrode active material under heating conditions, followed by a first extrusion molding process and a first calendering process.

In some embodiments, the preparation method for the negative electrode material sheet specifically includes: performing a third stirring process on a mixture of a negative electrode conductive agent and a negative electrode binder under heating conditions, followed by a second airflow milling process to obtain a second material; performing a fourth stirring process on a mixture of the second material and the negative electrode active material, followed by a second extrusion molding process and a second calendering process.

In some embodiments, the first stirring process and the third stirring process are each carried out at a rotation speed of 700-850 r/min, for a duration of 50-70 min, and at a heating temperature of 55-65°C.

In some embodiments, the first airflow milling process and the second airflow milling process are each performed with an inlet pressure of 0.8-1.2 MPa, and a feeding pressure of 0.8-1.2 MPa.

In some embodiments, the second stirring process and the fourth stirring process are each carried out at a rotation speed of 180-220 r/min, for a duration of 1.5-2.5 h, and at a heating temperature of 45-55°C.

In some embodiments, the first extrusion molding process and the second extrusion molding process are each performed at a temperature of 95-105°C; and yielding a film sheet with a thickness of 280-320 µm after both the first extrusion molding process and the second extrusion molding process.

In some embodiments, the first calendering process and the second calendering process are each carried out at a temperature of 115-125°C.

In some embodiments, the first hot-pressing process and the second hot-pressing process are each conducted at a temperature of 190-210°C.

In some embodiments, the preparation method for the positive electrode material sheet further includes: adding a solid electrolyte to the mixture of the first material and the positive electrode active material.

In some embodiments, the preparation method for the negative electrode material sheet further includes: adding a solid electrolyte to the mixture of the second material and the negative electrode active material.

In some embodiments, the preparation method further includes: disposing the first external conductor on the first reserved area of the positive electrode conductor layer; and disposing the second external conductor on the second reserved area of the negative electrode conductor layer.

In some embodiments, the disposing method further includes: preparing a first binder on one side surface of the insulating layer, and preparing a second binder on the other side surface of the insulating layer.

In some embodiments, the preparation method further includes: preparing the first carbon glue layer on the surface of the positive electrode conductor layer, and preparing the second carbon glue layer on the surface of the negative electrode conductor layer.

The present invention also provides a battery cell including at least one composite electrode sheet; the composite electrode sheet is the composite electrode sheet described above, or a composite electrode sheet prepared and obtained by the preparation method described above; the composite electrode sheet forms the battery cell in a stacked or wound structure; the stacked structure at least includes a wound and stacked structure; and the wound structure at least includes at least one of a square, wound, and cylindrical structures.

The present invention further provides a preparation method for the battery cell, including the following steps:
assembling the composite electrode sheets with a separator and stacking or winding them to form the battery cell, wherein the battery cell includes at least one of the wound and stacked structure, the wound structure, the cylindrical structure, and the square.

In some embodiments, the preparation method for the battery cell with the wound and stacked structure specifically includes: placing a plurality of composite electrode sheets on the separator, wherein the separator includes, in sequence along its length direction, a first reserved separator, an electrode sheet receiving area, and a second reserved separator; the plurality of composite electrode sheets are located within the electrode sheet receiving area; the positive electrode material layers of any two adjacent composite electrode sheets have opposite orientations, a length direction of the plurality of composite electrode sheets is the same as that of the separator, and the plurality of the composite electrode sheets are arranged in a row along a length direction of the separator; using the first reserved separator to wrap a first composite electrode sheet adjacent to the first reserved separator; and initiating winding and stacking from the first composite electrode sheet wrapped by the first reserved separator, proceeding sequentially towards the second reserved separator, to obtain the battery cell with a wound and stacked structure, wherein in the battery cell with the wound and stacked structure, the plurality of composite electrode sheets are stacked.

In some embodiments, a method for preparing a battery cell with a wound structure specifically includes: stacking the composite electrode sheet on top of the separator, wherein the length direction of the composite electrode sheet is the same as the length direction of the separator; and winding the composite electrode sheet starting from one end of the separator to form the battery cell with a wound structure.

In some embodiments, the battery cell with the cylindrical structure includes a battery cell body structure, a first external conductor, and a second external conductor.

A preparation method for the battery cell body structure specifically includes: placing a plurality of composite electrode sheets on the separator, wherein the separator includes, in sequence along its length direction, a first reserved separator, an electrode sheet receiving area, and a second reserved separator; the plurality of composite electrode sheets are located within the electrode sheet receiving area; the positive electrode material layers of any two adjacent composite electrode sheets have opposite orientations; a length direction of the plurality of composite electrode sheets is the same as that of the separator, and the plurality of composite electrode sheets are arranged in a row along the length direction of the separator; using the first reserved separator to wrap a first composite electrode sheet adjacent to the first reserved separator; and initiating winding and stacking from the first composite electrode sheet wrapped by the first reserved separator, proceeding sequentially towards the second reserved separator, to obtain the battery cell body structure, wherein in the battery cell body structure, the plurality of composite electrode sheets are stacked.

The first external conductor and the second external conductor are respectively located on both sides of the battery cell, and are arranged face-to-face; the length directions of the first external conductor and the second external conductor are both the same as a stacking direction of the composite electrode sheets, wherein on one side of the battery cell, a first reserved area in the positive electrode conductor layer forms a bend area and is connected to the first external conductor; and on the other side of the battery cell, a second reserved area in the negative electrode conductor layer forms a bend area and is connected to the second external conductor.

This application also provides a battery cell prepared and obtained produced by the above-described preparation method for the battery cell.

### BRIEF DESCRIPTION OF DRAWINGS

To more clearly illustrate the technical solutions of the embodiments of the present invention, the following briefly describes the drawings required for use in the embodiments. It should be understood that the following drawings are merely illustrative of the embodiments of the present invention, and the dimensions in the drawings do not directly correspond to the actual dimensions of the embodiments. Furthermore, the following drawings only illustrate certain embodiments of the present invention and should not be construed as limiting the scope of the present invention.
Figure 1 is a front view structural schematic of a composite electrode sheet in Example 1 of the present invention;
Figure 2 is a front view structural schematic of a composite electrode sheet in Example 4 of the present invention;
Figure 3 is a front view structural schematic of a composite electrode sheet in Example 5 of the present invention;
Figure 4 is a top view structural schematic of a composite electrode sheet in Example 1 of the present invention;
Figure 5 is a structural schematic of a battery cell in Example 11 of the present invention;
Figure 6 is a schematic of a winding and stacking process of the battery cell in Example 11 of the present invention;
Figure 7 is a structural schematic of a battery cell in Example 12 of the present invention;
Figure 8 is a structural schematic of a battery cell in Example 13 of the present invention.

Reference signs:
1-Insulating layer, 2-First bonding layer, 3-Second bonding layer, 4-Positive electrode conductor layer, 5-Negative electrode conductor layer, 6-Positive electrode material layer, 7-Negative electrode material layer, 8-First external conductor, 9-Second external conductor, 10-First carbon glue layer, 11-Second carbon glue layer, 12-Separator, 100-Composite electrode sheet.

### DETAILED DESCRIPTION OF EMBODIMENTS

The advantages of the embodiments described in the Summary will be explained in the Description section of the following description. Some of these advantages will be apparent from the description or can be obtained through some of the embodiments of the present invention.

The technical solutions of the present invention will be further illustrated below with reference to the drawings and through some embodiments.

To further clarify the objectives, technical solutions, and advantages of the present invention, the present invention will be further described in detail below with reference to the drawings and embodiments. It should be understood that the embodiments described herein are intended only to illustrate the present invention and are not intended to limit the present invention. Furthermore, the technical features described below in the various embodiments of the present invention may be combined as long as they do not conflict with each other. Without departing from the principles of the embodiments of the present invention, several improvements and modifications may be made, and these improvements and modifications are also considered to be within the scope of protection of the embodiments of the present invention.

Some embodiments provide a composite electrode sheet including a composite current collector, a positive electrode material layer, and a negative electrode material layer. The composite current collector includes an insulating layer, a positive electrode conductor layer, and a negative electrode conductor layer. The positive electrode conductor layer is disposed on a first surface of the insulating layer, and the negative electrode conductor layer is disposed on a second surface of the insulating layer. The positive electrode material layer is arranged on a surface of the positive electrode conductor layer away from the insulating layer; the negative electrode material layer is arranged on a surface of the negative electrode conductor layer away from the insulating layer. A width of the insulating layer ≥ a width of the positive electrode conductor layer ≥ a width of the positive electrode material layer; and the width of the insulating layer ≥ a width of the negative electrode conductor layer ≥ a width of the negative electrode material layer.

The composite electrode sheet of the present invention can solve a technical problem of poor alignment degree of battery cells during high-speed preparation. The composite electrode sheet of the present invention can improve manufacturing speed and yield rate while ensuring that the battery cells have high safety performance.

In some embodiments, a projection of the positive electrode material layer is located within an area of the insulating layer. A first end of the positive electrode conductor layer along its width direction is aligned with a first end of the insulating layer, and a second end of the positive electrode conductor layer along its width direction is aligned with a second end of the insulating layer or with the positive electrode material layer. A surface of the positive electrode conductor layer has a first reserved area for connecting a first external conductor.

In some embodiments, a projection of the negative electrode material layer is located within the area of the insulating layer. A first end of the negative electrode conductor layer along its width direction is aligned with a second end of the insulating layer, and a second end of the negative electrode conductor layer along its width direction is aligned with the first end of the insulating layer or with the negative electrode material layer. A surface of the negative electrode conductor layer has a second reserved area for connecting a second external conductor.

In some embodiments, the first reserved area is connected to the first external conductor; and the second reserved area is connected to the second external conductor.

In some embodiments, the first external conductor and the second external conductor are both parallel to the negative electrode material layer.

In some embodiments, the first external conductor and the second external conductor are both perpendicular to the negative electrode material layer, and the first external conductor and the second external conductor are arranged face-to-face. Part of the first external conductor area is a bent area and is connected to the first external conductor. Part of the second external conductor area is a bent area and is connected to the second external conductor.

In some embodiments, a material of the first external conductor includes at least one of aluminum and stainless steel, such as aluminum foil, stainless steel foil.

In some embodiments, a material of the second external conductor includes at least one of copper and nickel, such as copper foil or nickel foil.

In some embodiments, the insulating layer includes at least one of a polymer film and a non-woven fabric. In some embodiments, a thickness of the insulating layer is 1 µm to 10 µm, such as, but not limited to, 1 µm, 2 µm, 3 µm, 4 µm, 5 µm, 6 µm, 7 µm, 8 µm, 10 µm, or a range value consisting of any two thereof.

In some embodiments, the positive electrode conductor layer includes at least one of a first metal conductive foil and a first conductive plating layer. The material of both the first metal conductive foil and the first conductive plating layer includes aluminum. In some embodiments, a thickness of the positive electrode conductor layer is 0.5 µm to 10 µm, for example, but not limited to, 0.5 µm, 0.8 µm, 1 µm, 2 µm, 5 µm, 6 µm, 7 µm, 10 µm, etc., or a a range value consisting of any two thereof.

In some embodiments, the positive electrode material layer includes a positive electrode active material, wherein the positive electrode active material includes at least one of lithium cobalt oxide, lithium iron phosphate, lithium manganese iron phosphate, lithium manganese oxide, a ternary positive electrode material, Prussian blue, sodium iron phosphate, sodium vanadium fluorophosphate, sodium vanadium phosphate, and NaₓMO₂, where M in NaₓMO₂ is a transition metal element; the transition metal element includes at least one of Fe, Co, Ni, Mn, Cr, and Ti.

In some embodiments, a surface of the positive electrode conductor layer has a concave structure.

In some embodiments, the negative electrode conductor layer includes at least one of a second metal conductive foil and a second conductive plating layer. The material of the second metal conductive foil and the second conductive plating layer includes copper or aluminum. In some embodiments, a thickness of the negative electrode conductor layer is 0.5 µm to 8 µm, for example, but not limited to, 0.5 µm, 1 µm, 2 µm, 5 µm, 7 µm, 8 µm, or a range value consisting of any two thereof. In some embodiments, the negative electrode material layer includes a negative electrode active material, wherein the negative electrode active material includes at least one of graphite, hard carbon, and lithium titanate.

In some embodiments, a first bonding layer is disposed between the positive electrode conductor layer and the insulating layer. In some embodiments, a second bonding layer is disposed between the negative electrode conductor layer and the insulating layer. In some embodiments, the material of both the first bonding layer and the second bonding layer includes at least one of maleic anhydride-modified PP, polyacrylic acid, and cross-linked epoxy resin. In some embodiments, a thickness of both the first bonding layer and second bonding layer is 0.2 µm to 2 µm, for example, but not limited to, 0.2 µm, 0.5 µm, 1 µm, 2 µm, or a range value consisting of any two thereof.

In some embodiments, a first carbon glue layer is further disposed between the positive electrode conductor layer and the positive electrode material layer. In some embodiments, a second carbon glue layer is further disposed between the negative electrode conductor layer and the negative electrode material layer. In some embodiments, both the first carbon glue layer and the second carbon glue layer include a conductive carbon material and a binder; a mass ratio of the conductive carbon material to the binder is (0.8-1):(0.8-1), for example, 1:1. The present invention utilizes carbon glue layers to achieve effective bonding and improve the electrochemical performance of the composite electrode sheet. In some embodiments, the conductive carbon material includes at least one of conductive carbon black, conductive graphite, carbon nanotubes, and graphene. In some embodiments, the binder includes at least one of polyacrylate, styrenebutadiene rubber, and PVDF.

In some embodiments, a method for preparing a composite electrode sheet includes the following steps:
(a) preparing a composite current collector; the composite current collector includes an insulating layer, a positive electrode conductor layer, and a negative electrode conductor layer;
(b) preparing a positive electrode material layer on the surface of the positive electrode conductor layer, wherein the preparation of the positive electrode material layer includes: laminating the positive electrode conductor layer with a positive electrode material sheet in a first hot-pressing process, or coating the surface of the positive electrode conductor layer with a positive electrode slurry;
(c) preparing a negative electrode material layer on the surface of the negative electrode conductor layer, wherein the preparation of the negative electrode material layer includes: laminating the negative electrode conductor layer with a negative electrode material sheet in a second hot-pressing process, or coating the surface of the negative electrode conductor layer with a negative electrode slurry;

Step (b) and step (c) can be performed in any order.

In some embodiments, both the positive electrode conductor layer and the negative electrode conductor layer are laminated to the insulating layer by bonding or by vapor-depositing.

In some embodiments, the method for preparing a composite current collector in the present invention includes: coating one surface of an insulating layer with a binder, drying it to form a first bonding layer, thermally laminating it with a positive electrode conductor, and performing a first curing treatment to obtain a positive electrode conductor layer; coating the other surface of the insulating layer with a binder, drying it to form a second bonding layer, thermally laminating it with a negative electrode conductor, and performing a second curing treatment to obtain a negative electrode conductor layer. In some embodiments, the binder is applied to both surfaces of the insulating layer to an areal density of 0.8 to 1.2 g/m². In some embodiments, a temperature for thermally laminating both the positive electrode conductor and the negative electrode conductor is 75 to 85°C. In some embodiments, the temperature for the first curing treatment and the second curing treatment is 70 to 80°C, and the curing time is 4 to 6 days.

In some embodiments, the method for preparing a composite current collector includes: vapor-depositing one surface of the insulating layer with a positive electrode conductor layer and vapor-depositing the other surface of the insulating layer with a negative electrode conductor layer. In some embodiments, an initial vacuum level of a vacuum chamber for vapor deposition is 4×10⁻² to 6×10⁻² Pa. In some embodiments, an initial vapor deposition temperature is 1300-1400°C. In one embodiment, the initial vacuum level for vapor depositing the negative electrode conductor layer is 10⁻⁵ Pa, and the vapor deposition temperature is 1790-1850°C.

In some embodiments, the method for preparing a positive electrode material sheet specifically includes: performing a first stirring process on a mixture of a positive electrode conductive agent and a positive electrode binder under heating conditions, followed by a first airflow milling process to obtain a first material; performing a second stirring process on a mixture of the first material and a positive electrode active material under heating conditions, followed by a first extrusion molding process and a first calendering process.

In some embodiments, the method for preparing a negative electrode material sheet specifically includes: performing a third stirring process on a mixture of a negative electrode conductive agent and a negative electrode binder under heating conditions, followed by a second airflow milling process to obtain a second material; performing a fourth stirring process on a mixture of the second material and the negative electrode active material, followed by a second extrusion molding process and a second calendering process.

In some embodiments, rotation speeds of the first stirring process and the third stirring process are both 700-850 r/min, such as but not limited to 700 r/min, 750 r/min, 780 r/min, 800 r/min, 820 r/min, or 850 r/min, etc., or a range value consisting of any two thereof; a duration for stirring process is both 50-70 min, such as but not limited to 50 min, 55 min, 60 min, or 70 min, etc., or range value consisting of any two thereof; and a heating temperature is both 55-65°C, such as but not limited to 55°C, 58°C, 60°C, or 65°C, etc., or a range value consisting of any two thereof.

In some embodiments, an inlet pressure for both the first airflow milling process and the second airflow milling process is 0.8-1.2 MPa, such as, but not limited to, 0.9 MPa, 1 MPa, 1.1 MPa, etc., or a range value consisting of any two thereof; and a feeding pressure is both 0.8-1.2 MPa, such as, but not limited to, 0.9 MPa, 1 MPa, 1.1 MPa, etc., or a range value consisting of any two thereof.

In some embodiments, rotation speeds of the second stirring process and the fourth stirring process are both 180-220 r/min, such as but not limited to 180 r/min, 190 r/min, 200 r/min, 210 r/min, 220 r/min, etc., or a range value consisting of any two thereof; a duration for stirring process is both 1.5-2.5 h, such as but not limited to 1.5 h, 2 h, or 2.5 h, etc., or a range value consisting of any two thereof; and the heating temperatures are both 45-55°C, such as but not limited to 45°C, 50°C, 55°C, etc., or a range value consisting of any two thereof.

In some embodiments, the temperatures for both the first extrusion molding process and the second extrusion molding process are 95-105°C, for example, but not limited to, 95°C, 100°C, 105°C, etc., or a range value consisting of any two thereof. After both the first extrusion molding process and the second extrusion molding process, a film sheet with a thickness of 280-320 µm is obtained, for example, the thickness can be but not limited to 290 µm, 300 µm, 310 µm, etc., or a range value consisting of any two thereof.

In some embodiments, the temperatures for both the first calendering process and the second calendering process are 115-125°C, for example, but not limited to, 115°C, 120°C, 125°C, etc., or a range value consisting of any two thereof.

In some embodiments, the temperatures for both the first hot-pressing lamination and the second hot-pressing lamination are 190-210°C, for example, but not limited to, 195°C, 200°C, 205°C, etc., or a range value consisting of any two thereof.

In some embodiments, the method for preparing the positive electrode material sheet further includes adding a solid electrolyte to the mixture of the first material and the positive electrode active material.

In some embodiments, the method for preparing a negative electrode material sheet further includes adding the solid electrolyte to the mixture of the second material and the negative electrode active material.

In some embodiments, the method further includes disposing a first external conductor on a first reserved area of the positive electrode conductor layer; and disposing a second external conductor on a second reserved area of the negative electrode conductor layer. In some embodiments, the first external conductor is connected to the first reserved area by welding (ultrasonic welding), conductive adhesive bonding, riveting, or the like; and the second external conductor is connected to the second reserved area by welding (ultrasonic welding), conductive adhesive bonding, riveting, or the like.

The present invention also relates to a battery cell including at least one composite electrode sheet; the composite electrode sheet is said composite electrode sheet, or a composite electrode sheet prepared by said preparation method, wherein the composite electrode sheets are stacked or wound to form the battery cell; the stacked structure includes at least a wound and stacked structure; and the wound structure includes at least one of a square (Pounch) wound structure and a cylindrical (wound) structure.

Compared to the prior art, this structure features a circuit in the battery cell forming an integral series connection, and a unit structure between adjacent separators contains both the positive electrode (or positive electrode material layer) and the negative electrode (or negative electrode material layer). In the prior art, the unit structure between adjacent separators is a single positive electrode or a single negative electrode.

This structure also offers the advantage of series connection within the battery cells, reducing internal circuit consumption and simplifying the internal and external circuit structures.

In some embodiments, a method for preparing a battery cell with a wound and stacked structure specifically includes: placing the plurality of composite electrode sheets on a separator, the separator including, in sequence along its length direction, a first reserved separator, an electrode sheet receiving area, and a second reserved separator; the plurality of composite electrode sheets are located within the electrode sheet receiving area; the positive electrode material layers of any two adjacent composite electrode sheets have opposite orientations, a length direction of the plurality of composite electrode sheets is the same as that of the separator, and the composite electrode sheets are arranged in a row along the length direction of the separator; using the first reserved separator to wrap a first composite electrode sheet adjacent to the first reserved separator; and initiating winding and stacking from the first composite electrode sheet wrapped by the first reserved separator, proceeding sequentially towards the second reserved separator, to obtain the battery cell with a wound and stacked structure; in the battery cell with a wound and stacked structure, the plurality of composite electrode sheets are stacked.

Compared to existing winding and stacking processes, the battery cell with a wound and stacked structure in the present invention includes identical composite electrode sheets in each repeating unit. There is no need to laminate the separator and the electrode sheet before the winding and stacking, and there is no need to consider the alignment issue of the positive and negative electrodes. The process is simple, production speed is fast, and yield rate is high.

In some embodiments, a method for preparing a battery cell with a wound structure specifically includes: stacking the composite electrode sheets on top of a separator, wherein the length direction of the composite electrode sheets is the same as the length direction of the separator; and initiating winding the composite electrode sheets from one end of the separator to form the battery cell with a wound structure.

Compared to the prior art, the battery cell produced by the winding process disclosed herein simplifies assembly by winding the composite electrode sheet and a layer of separator without requiring alignment; only needs to ensure that the separator extends beyond the electrode sheet. This process is simple, production speed is fast, and yield rate is high.

In some embodiments, a battery cell with a cylindrical structure includes a battery cell body structure, a first external conductor, and a second external conductor.

The method for preparing the battery cell body structure specifically includes: placing the plurality of composite electrode sheets on the separator, wherein the separator includes, in sequence along its length direction, a first reserved separator, an electrode sheet receiving area, and a second reserved separator; the plurality of composite electrode sheets are located within the electrode sheet receiving area; the positive electrode material layers of any two adjacent composite electrode sheets have opposite orientations; the length direction of the plurality of composite electrode sheets is the same as that of the separator, and the plurality of composite electrode sheets are arranged in a row along the length direction of the separator; using the first reserved separator to wrap a first composite electrode sheet adjacent to the first reserved separator; and initiating winding and stacking from the first composite electrode sheet wrapped by the first reserved separator, proceeding sequentially towards the second reserved separator, to obtain the battery cell body structure; in the battery cell body structure, the plurality of composite electrode sheets are stacked.

The first external conductor and the second external conductor are located on opposite sides of the battery cell, and arranged face-to-face; the length directions of both the first external conductor and the second external conductor are the same as a stacking direction of the composite electrode sheets; on one side of the battery cell, the first reserved area in the positive electrode conductor layer forms a bend area and is connected to the first external conductor; on the other side of the battery cell, the second reserved area in the negative electrode conductor layer forms a bend area and is connected to the second external conductor.

In the battery cell with a cylindrical structure in the present invention, the first external conductor area and the first external conductor are laser welded. The second external conductor area and the second external conductor are also laser welded.

### Examples

The following are typical but non-limiting examples of the present invention.

### Example 1

A composite electrode sheet includes a composite current collector, a positive electrode material layer 6, and a negative electrode material layer 7. The composite current collector includes a positive electrode conductor layer 4, a first bonding layer 2, an insulating layer 1, a second bonding layer 3, and a negative electrode conductor layer 5 stacked in sequence. The negative electrode material layer 7 is disposed on the surface of the negative electrode conductor layer 5 away from the insulating layer 1. The positive electrode material layer 6 is disposed on the surface of the positive electrode conductor layer 4 away from the insulating layer 1.

The width of the insulating layer 1 = the width of the positive electrode conductor layer 4 > the width of the positive electrode material layer 6, and the projection of the positive electrode material layer 6 is located directly in the center of the insulating layer 1. The surface of the positive electrode conductor layer 4 has a first reserved area. The width of the insulating layer 1 = the width of the negative electrode conductor layer 5 > the width of the negative electrode material layer 7. The projection of the negative electrode material layer 7 is located directly in the center of the insulating layer 1. The surface of the negative electrode conductor layer 5 has a second reserved area. The first reserved area is connected to the first external conductor 8, and the second reserved area is connected to the second external conductor 9. The first external conductor 8 and second external conductor 9 are arranged opposite each other (located on both sides of the composite electrode sheet).

The preparation method of the composite electrode sheet in this embodiment includes the following steps.
(1) preparing of composite current collector: using 4.5 µm PET as the substrate, evenly coating ZAR-1902B binder produced by Zhengzhou Zhuoertai New Material Technology Co., Ltd. on the surface of one side of the PET and drying it, with a density of the coating surface 1.0 g/m²; after drying, thermally laminating 5 µm aluminum foil at a roller temperature of 80°C, and then curing it at 75°C for 5 days; coating the above-mentioned binder on the surface of the other side of the PET and drying it, and thermally laminating 4.5 µm copper foil at a roller temperature of 80°C, and then curing it at 75°C for 5 days to prepare a composite current collector, wherein, the positive electrode conductor layer 4 is 5 µm aluminum foil and the negative electrode metal layer is 4.5 µm copper foil;
(2) coating graphite negative electrode slurry on the negative electrode conductor layer 5 of the above-mentioned composite current collector and drying it, and then rolling it to form a negative electrode material layer 7, wherein the negative electrode slurry, by mass percentage, comprises 97% graphite active material, 1.5% CMC, and 1.5% SBR, a density of the negative electrode material layer is 102g/m², and the density after rolling is 1.72g/cm³; coating the positive electrode slurry on the positive electrode conductor layer 4 and drying it, then rolling it to form the positive electrode material layer 6, wherein the positive electrode slurry, by mass percentage, comprises 97% positive electrode active material (lithium manganese iron phosphate), 1.5% conductive carbon black, and 1.5% PVDF, a density of the positive electrode material layer is 206.5g/m², and the density after rolling is 4.15g/cm³; using a 10 µm aluminum foil as the first external conductor 8 and bonding the 10 µm aluminum foil to the positive electrode conductor layer 4 using conductive binder and drying it; using a 5µm copper foil as the second external conductor 9 and bonding the 5µm copper foil to the negative electrode conductor layer 5 using conductive binder and drying it, forming a composite electrode sheet with an electrical connection lead.

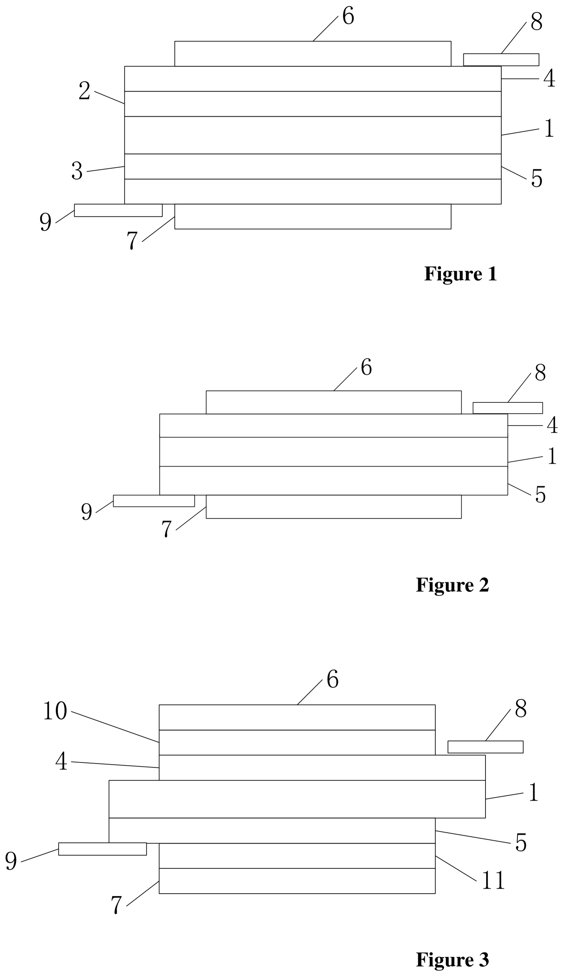

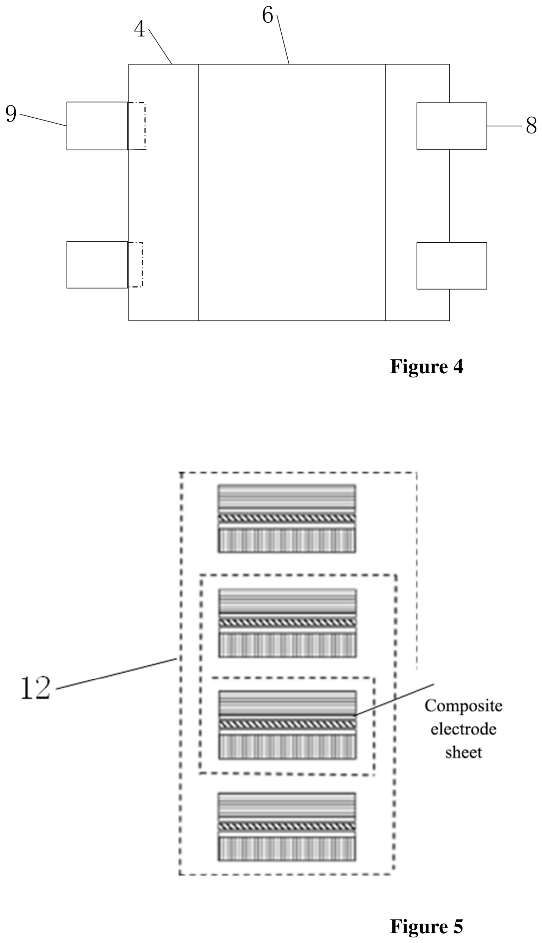

The front view structural schematic of the composite electrode sheet in this embodiment is shown in Figure 1, and the top view structural schematic of the composite electrode sheet is shown in Figure 4.

### Example 2

A method for preparing a composite electrode sheet differs from Example 1 in that: a thickness of PET is 2µm. After laminating aluminum foil, it is corroded in a 10% NaOH solution until the aluminum layer thickness is 0.5µm, and then rinsed. The thickness of the thermally laminated copper foil is 0.5µm.

### Example 3

A method for preparing a composite electrode sheet differs from Example 1 in that: the thickness of PET is 10 µm, the thickness of the laminated aluminum foil is 10 µm, and the thickness of the laminated copper foil is 8 µm.

### Example 4

A method for preparing a composite electrode sheet includes the following steps:
(1) placing a 6µm insulating layer 1 (PP film) into a vacuum chamber of an evaporation deposition film machine, sealing the vacuum chamber and evacuating it to a vacuum degree of 5×10²Pa, heating an evaporation mechanism to 1350°C, and then sending aluminum to the evaporation mechanism for evaporation, vapor depositing an aluminum layer with a thickness of 1µm on the PP film to form a positive electrode conductor layer 4; after evaporating the vapor deposition chamber of the vacuum ion vapor deposition equipment to a vacuum degree of 10⁻⁵Pa, passing the PP film with an aluminum layer on one side through a copper deposition roller, evaporating 99.9% pure copper metal in an evaporation boat at 1800°C, and vapor depositing the copper on a side of the PP film without the aluminum layer, wherein the thickness of the copper layer is 1 µm, to form a negative electrode conductor layer 5;
(2) coating a graphite negative electrode slurry on the negative electrode conductor layer 5 of the above-mentioned composite current collector and drying it, and then rolling it to form a negative electrode material layer 7, the composition of the negative electrode slurry is the same as that of Example 1; coating a positive electrode slurry on the positive electrode conductor layer 4 and drying it, and then rolling it to form a positive electrode material layer 6, the composition of the positive electrode slurry is the same as that of Example 1; using a 10 µm aluminum foil as the first external conductor 8, and bonding the 10 µm aluminum foil to the positive electrode conductor layer 4 using a conductive binder and drying it; using a 5 µm copper foil as the second external conductor 9, and bonding the 5 µm copper foil to the negative electrode conductor layer 5 using a conductive binder and drying it, forming a composite electrode sheet with an electrical connection lead.

The front view structural schematic of the composite electrode sheet in this embodiment is shown in Figure 2.

### Example 5

A composite electrode sheet, as shown in Figure 3, includes a composite current collector, a positive electrode material layer 6, and a negative electrode material layer 7. The composite current collector includes a first carbon glue layer 10, a positive electrode conductor layer 4, an insulating layer 1, a negative electrode conductor layer 5, and a second carbon glue layer 11, stacked in sequence. The positive electrode material layer 6 is disposed on the surface of the first carbon glue layer 10, and the negative electrode material layer 7 is disposed on the surface of the second carbon glue layer 11.

The width of the insulating layer 1 > the width of the positive electrode conductor layer 4 > the width of the positive electrode material layer 6. The projection of the positive electrode material layer 6 is located directly in the center of the insulating layer 1. The first end of the positive electrode conductor layer 4 along its width direction is aligned with the first end of the insulating layer 1. The second end of the positive electrode conductor layer 4 along its width direction is aligned with the positive electrode material layer 6. The surface of the positive electrode conductor layer 4 has a first reserved area.

The width of the insulating layer 1 > the width of the negative electrode conductor layer 5 > the width of the negative electrode material layer 7. The projection of the negative electrode material layer 7 is located directly in the center of the insulating layer 1. The first end of the negative electrode conductor layer 5 along its width direction is aligned with the second end of the insulating layer 1, and the second end of the negative electrode conductor layer 5 along its width direction is aligned with the negative electrode material layer 7. The surface of the negative electrode conductor layer 5 has a second reserved area.

The first reserved area is connected to the first external conductor 8, and the second reserved area is connected to the second external conductor 9. The first external conductor 8 and the second external conductor 9 are arranged opposite each other (on both sides of the composite electrode sheet).

The method for preparing the composite electrode sheet in this embodiment includes the following steps:
(1) placing a 6µm insulating layer 1 (PI film) into a vacuum chamber of an evaporation deposition film machine, sealing the vacuum chamber and evacuating it to a vacuum degree of 5×10⁻²Pa, heating an evaporation mechanism to 1350°C, and then sending aluminum to the evaporation mechanism for evaporation, vapor depositing an aluminum layer with a thickness of 1µm on the PP film to form a positive electrode conductor layer 4; after evaporating the vapor deposition chamber of the vacuum ion vapor deposition equipment to a vacuum degree of 10⁻⁵Pa, passing the PP film with an aluminum layer on one side through a copper deposition roller, evaporating 99.9% pure copper metal in an evaporation boat at 1800°C, and vapor depositing the copper on a side of the PP film without the aluminum layer, wherein the thickness of the copper layer is 1 µm, to form a negative electrode conductor layer 5;
(2) coating a first carbon glue slurry on the positive electrode conductor layer 4 and drying it to form a first carbon glue layer 10; coating a second carbon glue slurry on the negative electrode conductor layer 5 and drying it to form a second carbon glue layer 11, wherein the first carbon glue slurry and the second carbon glue slurry are the same, both including conductive carbon black, PVDF and NMP, a mass ratio of conductive carbon black to PVDF is 1:1, and the solid content of the slurry is 25%, to obtain a composite current collector;
(3) using a mixer with strong shear force to mix and stir the conductive agent and the binder for 1 hour at a controlled speed of 800 r/min and a stirring temperature of 60°C; then using a jet mill to mechanically mix to obtain a first material, with an air inlet pressure of 1 MPa and a feed pressure of 1 MPa; adding a positive electrode active material to the first material and mixing the mixture in a mixer at a mixer speed of 200 r/min for 2 hours, while controlling the stirring temperature to 50°C; then extruding and molding the obtained material through a screw extruder at 100°C to obtain a continuous 300 µm thick sheet; then rolling the sheet at 120°C into a 90 µm thin film, i.e., a positive electrode material sheet; and hot-pressing laminating the positive electrode material sheet with the aluminum layer side of the composite current collector at a controlled lamination temperature of 200°C to form a positive electrode material layer 6, wherein the mass ratio of the positive electrode active material, the conductive agent, and the binder is 86:4:10, the positive electrode active material is lithium manganese iron phosphate, the conductive agent is conductive carbon black, and the binder is PVDF;
(4) using the mixer with strong shear force to mix and stir the conductive agent and binder for 1 hour at a controlled speed of 800 r/min and a stirring temperature of 60°C to obtain a dry powder; then using a jet mill to mechanically mix the obtained dry powder at an inlet pressure of 1 MPa and a feed pressure of 1.0 MPa to obtain a second material; adding a negative electrode active material to the second material at a mixer speed of 200 r/min for 2 hours and a controlled stirring temperature of 50°C; then extruding and molding the obtained material through a screw extruder at 100°C to obtain a continuous 300 µm thick sheet; then rolling the obtained sheet at 120°C into a 120 µm thin film, i.e., a negative electrode material sheet; and hot-pressing laminating the negative electrode material sheet with the second carbon glue layer 11 of the composite current collector at a controlled lamination temperature of 200°C to form a negative electrode material layer 7, wherein the mass ratio of the negative electrode active material, the conductive agent and the binder is 87:3:10, the negative electrode active material is graphite, the conductive agent is conductive carbon black, and the binder is CMC and SBR with a mass ratio of 1:1.

### Example 6

A method for preparing a composite electrode sheet, except that the material of the negative electrode conductor layer 5 is aluminum, other conditions are the same as those in Example 4. The composite electrode sheet in this example is used for sodium batteries.

### Example 7

A method for preparing a composite electrode sheet, except that the first external conductor 8 uses a 20µm stainless steel sheet and the second external conductor 9 uses a 9µm nickel sheet, all other conditions are the same as those in Example 1.

### Example 8

A method for preparing a composite electrode sheet in the present example, except that the first external conductor 8 is a 10 µm aluminum foil and is riveted to the positive electrode conductor layer; the second external conductor 9 is a 6µm copper foil and is riveted to the negative electrode conductor layer 5, all other conditions are the same as those in Example 1.

### Example 9

A method for preparing a composite electrode sheet differs from Example 8 in that the first external conductor 8 is ultrasonically welded to the first reserved area; and the second external conductor 9 is ultrasonically welded to the second reserved area.

### Example 10

A method for preparing a composite electrode sheet differs from Example 5 in that the preparation methods for the positive electrode material sheet and the negative electrode material sheet are as follows.

The method for preparing the positive electrode material sheet in this example includes using LiCoO₂ as the positive electrode active material and mixing the positive electrode active material, solid electrolyte material Li7P3S11, and conductive agent carbon black in a weight ratio of 6:3:1 to obtain a positive electrode mixture; then, using a press to make the positive electrode mixture to form a positive electrode coating sheet having a thickness of 100 µm; and thermally laminating the positive electrode material sheet to the surface of the first carbon glue layer 10 of the composite current collector to obtain a positive electrode material layer 6.

The method for preparing the negative electrode material sheet in this example differs from the method for preparing the positive electrode material sheet in this example in that a negative electrode active material is used, wherein the negative electrode active material is graphite.

### Example 11

A method for preparing a battery cell with a wound and stacked structure is prepared and obtained using the composite electrode sheet 100 of Example 5. The method specifically includes: placing the plurality of composite electrode sheets on a separator 12, wherein the separator 12 includes, in sequence along its length direction, a first reserved separator 12, an electrode sheet receiving area, and a second reserved separator 12; the plurality of composite electrode sheets are located within the electrode sheet receiving area; the positive electrode material layers 6 of any two adjacent composite electrode sheets have opposite orientations, the length direction of the plurality of composite electrode sheets is the same as that of the separator 12, and the plurality of the composite electrode sheets are arranged in a row along the length direction of the separator 12; using the first reserved separator 12 to wrap the first composite electrode sheet adjacent to the first reserved separator 12 ; and initiating winding and stacking from the first composite electrode sheet wrapped by the first reserved separator 12, proceeding sequentially towards the second reserved separator 12, to obtain the battery cell with a wound and stacked structure; in the battery cell with a wound and stacked structure, arranging the plurality of composite electrode sheets stacked.

A structural schematic of the battery cell in this example is shown in Figure 5.

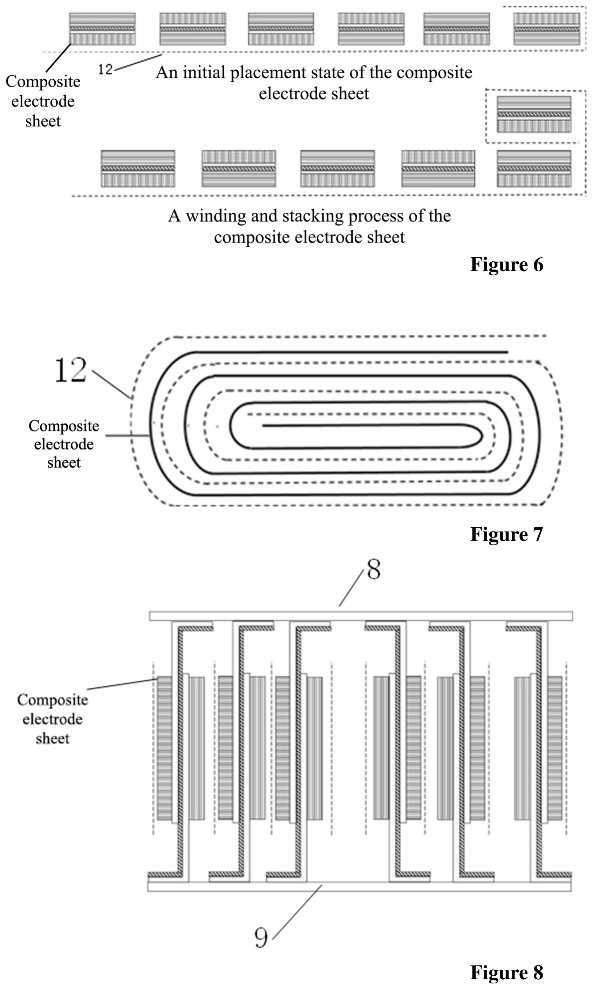

A schematic of the wound and stacked process of the battery cell in this example is shown in Figure 6.

### Example 12

A method for preparing a battery cell with a wound structure employing the composite electrode sheet of Example 5 specifically includes: laminating the composite electrode sheets on top of a separator 12, wherein the length direction of the composite electrode sheets is the same as the length direction of the separator 12; and winding the separator 12 from one end thereof to form the battery cell with a wound structure, wherein the length of the separator 12 is greater than the length of the composite electrode sheet, and the width of the separator 12 is greater than the width of the composite electrode sheet.

A structural schematic of the battery cell of this example is shown in Figure 7.

### Example 13

A battery cell with a cylindrical structure, as shown in Figure 8, includes a battery cell body structure, a first external conductor 8, and a second external conductor 9.

The method for preparing the battery cell body structure specifically includes: placing plurality of composite electrode sheets according to Example 5 (excluding the first external conductor 8 and the second external conductor 9 in Example 5) on a separator 12, wherein the separator 12 includes, in sequence along its length direction, a first reserved separator12, an electrode sheet receiving area, and a second reserved separator12; the plurality of composite electrode sheets are located within the electrode sheet receiving area; the positive electrode material layers 6 of any two adjacent composite electrode sheets have opposite orientations; the length direction of the plurality of composite electrode sheets is the same as that of the separator 12, and the plurality of the composite electrode sheets are arranged in a row along the length direction of the separator 12; using the first reserved separator 12 to wrap the first composite electrode sheet adjacent to the first reserved separator 12 ; and initiating winding and stacking from the first composite electrode sheet wrapped by the first reserved separator 12, proceeding sequentially towards the second reserved separator 12, to obtain the battery cell body structure; in the battery cell body structure, arranging the plurality of composite electrode sheets stacked.

In this battery cell, the first external conductor 8 and the second external conductor 9 are located on opposite sides of the battery cell, and arranged face-to-face. The length direction of the first external conductor 8 and second external conductor 9 is the same as the stacking direction of the composite electrode sheets. On one side of the battery cell, a first reserved area in the positive electrode conductor layer forms a bend area and is connected to the first external conductor 8. On the other side of the battery cell, a second reserved area in the negative electrode conductor layer 5 forms a bend area and is connected to the second external conductor 9. The first external conductor is laser welded; the second external conductor 9 is laser welded.

### INDUSTRIAL APPLICABILITY

In summary, the present invention provides a composite electrode sheet and a preparation method therefor, a battery cell and a preparation method therefor. This composite electrode sheet can improve manufacturing speed and yield rate, ensuring that the battery cell has high safety performance and electrochemical performance. The preparation method is efficient, improves product yield rate, and ensures that the battery cell has high safety performance.

## Claims

1. A composite electrode sheet, **characterized by** comprising a composite current collector, a positive electrode material layer, and a negative electrode material layer, wherein the composite current collector comprises an insulating layer, a positive electrode conductor layer, and a negative electrode conductor layer; the positive electrode conductor layer is disposed on a first surface of the insulating layer, and the negative electrode conductor layer is disposed on a second surface of the insulating layer; the positive electrode material layer is disposed on a surface of the positive electrode conductor layer away from the insulating layer; and the negative electrode material layer is disposed on a surface of the negative electrode conductor layer away from the insulating layer,
wherein a width of the insulating layer ≥ a width of the positive electrode conductor layer ≥ a width of the positive electrode material layer; and
the width of the insulating layer ≥ a width of the negative electrode conductor layer ≥ a width of the negative electrode material layer.

2. The composite electrode sheet according to claim 1, wherein a projection of the positive electrode material layer is located within an area of the insulating layer; a first end of the positive electrode conductor layer along its width direction is aligned with a first end of the insulating layer, and a second end of the positive electrode conductor layer along its width direction is aligned with a second end of the insulating layer or aligned with the positive electrode material layer; a surface of the positive electrode conductor layer has a first reserved area for connecting a first external conductor;
and/or a projection of the negative electrode material layer is located within the area of the insulating layer; a first end of the negative electrode conductor layer along its width direction is aligned with a second end of the insulating layer, and a second end of the negative electrode conductor layer along its width direction is aligned with the first end of the insulating layer or aligned with the negative electrode material layer; and a surface of the negative electrode conductor layer has a second reserved area for connecting a second external conductor.

3. The composite electrode sheet according to claim 2, wherein the composite electrode sheet comprises one of the following features (1) and (2):
(1) the first reserved area is connected to the first external conductor, the second reserved area is connected to the second external conductor, and the first external conductor and the second external conductor are both parallel to the negative electrode material layer; and
(2) the first reserved area is connected to the first external conductor; and the second reserved area is connected to the second external conductor, the first external conductor and the second external conductor are both perpendicular to the negative electrode material layer, and the first external conductor and the second external conductor are arranged face-to-face.

4. The composite electrode sheet according to claim 3, wherein the composite electrode sheet comprises at least one of the following features (1) to (3):
(1) a material of the first external conductor comprises at least one of aluminum and stainless steel;
(2) a material of the second external conductor comprises at least one of copper and nickel; and
(3) a thickness of the insulating layer is 1 to 10 µm.

5. The composite electrode sheet according to claim 3, wherein the composite electrode sheet comprises at least one of the following features (1) to (4):
(1) the positive electrode conductor layer comprises at least one of a first metal conductive foil and a first conductive plating layer;
(2) a thickness of the positive electrode conductor layer is 0.5 to 10 µm;
(3) the positive electrode material layer comprises a positive electrode active material, wherein the positive electrode active material comprises at least one of lithium cobalt oxide, lithium iron phosphate, lithium manganese iron phosphate, lithium manganese oxide, a ternary positive electrode material, Prussian blue, sodium iron phosphate, sodium vanadium fluorophosphate, sodium vanadium phosphate, and NaₓMO₂, where M in NaₓMO₂ is a transition metal element; and
(4) a surface of the positive electrode conductor layer has a concave structure.

6. The composite electrode sheet according to claim 3, wherein the composite electrode sheet comprises at least one of the following features (1) to (3):
(1) the negative electrode conductor layer comprises at least one of a second metal conductive foil and a second conductive plating layer;
(2) a thickness of the negative electrode conductor layer is 0.5 to 8 µm; and
(3) the negative electrode material layer comprises a negative electrode active material, wherein the negative electrode active material comprises at least one of graphite, hard carbon, and lithium titanate.

7. The composite electrode sheet according to claim 3, wherein the composite electrode sheet comprises one of the following features (1) to (3):
(1) a first bonding layer is further disposed between the positive electrode conductor layer and the insulating layer;
(2) a second bonding layer is further disposed between the negative electrode conductor layer and the insulating layer; and
(3) a thickness of both the first bonding layer and the second bonding layer is 0.2 to 2 µm.

8. The composite electrode sheet according to claim 3, wherein the composite electrode sheet comprises one of the following features (1) to (3):
(1) a first carbon glue layer is further disposed between the positive electrode conductor layer and the positive electrode material layer;
(2) a second carbon glue layer is further disposed between the negative electrode conductor layer and the negative electrode material layer; and
(3) both the first carbon glue layer and the second carbon glue layer comprise a conductive carbon material and a binder; and a mass ratio of the conductive carbon material to the binder is (0.8-1):(0.8-1).

9. A preparation method for the composite electrode sheet according to any one of claims 1 to 8, **characterized by** comprising steps of:
(a) preparing the composite current collector, wherein the composite current collector comprises the insulating layer, the positive electrode conductor layer, and the negative electrode conductor layer;
(b) preparing the positive electrode material layer on the surface of the positive electrode conductor layer, wherein a preparation of the positive electrode material layer comprises: laminating the positive electrode conductor layer with a positive electrode material sheet in a first hot-pressing process, or coating the surface of the positive electrode conductor layer with a positive electrode slurry;
(c) preparing the negative electrode material layer on the surface of the negative electrode conductor layer, wherein a preparation of the negative electrode material layer comprises: laminating the negative electrode conductor layer with a negative electrode material sheet in a second hot-pressing process, or coating the surface of the negative electrode conductor layer with a negative electrode slurry,
wherein, step (b) and step (c) can be performed in any order.

10. The preparation method for the composite electrode sheet according to claim 9, wherein the preparation method comprises at least one of the following features (1) and (2):
(1) a method for preparing the positive electrode material sheet specifically comprises: performing a first stirring process on a mixture of a positive electrode conductive agent and a positive electrode binder under heating conditions, followed by a first airflow milling process to obtain a first material; performing a second stirring process on a mixture of the first material and a positive electrode active material under heating conditions, followed by a first extrusion molding process and a first calendering process; and
(2) a method for preparing a negative electrode material sheet specifically comprises: performing a third stirring process on a mixture of a negative electrode conductive agent and a negative electrode binder under heating conditions, followed by a second airflow milling process to obtain a second material; performing a fourth stirring process on a mixture of the second material and the negative electrode active material, followed by a second extrusion molding process and a second calendering process.

11. The preparation method for the composite electrode sheet according to claim 10, wherein the preparation method comprises at least one of the following features (1) to (6):
(1) the first stirring process and the third stirring process each being carried out at a rotation speed of 700-850 r/min, for a duration of 50-70 min, and at a heating temperature of 55-65°C;
(2) the first airflow milling process and the second airflow milling process each being performed with an inlet pressure of 0.8-1.2 MPa, and a feeding pressure of 0.8-1.2 MPa;
(3) the second stirring process and the fourth stirring process each being carried out at a rotation speed of 180-220 r/min, for a duration of 1.5-2.5 h, and at a heating temperature of 45-55°C;
(4) the first extrusion molding process and the second extrusion molding process each being performed at a temperature of 95-105°C; and yielding a film sheet with a thickness of 280-320 µm after both the first extrusion molding process and the second extrusion molding process;
(5) the first calendering process and the second calendering process each being carried out at a temperature of 115-125°C; and
(6) the first hot-pressing process and the second hot-pressing process each being conducted at a temperature of 190-210°C.

12. The preparation method for the composite electrode sheet according to claim 10, wherein the preparation method comprises at least one of the following features (1) to (2):
(1) the method for preparing the positive electrode material sheet further comprises: adding a solid electrolyte to the mixture of the first material and the positive electrode active material; and
(2) the method for preparing the negative electrode material sheet further comprises: adding a solid electrolyte to the mixture of the second material and the negative electrode active material.

13. The preparation method for the composite electrode sheet according to claim 10, wherein the preparation method comprises at least one of the following features (1) to (3):
(1) further comprising: disposing the first external conductor on the first reserved area of the positive electrode conductor layer; and disposing the second external conductor on the second reserved area of the negative electrode conductor layer;
(2) further comprising: preparing a first binder on one side surface of the insulating layer, and preparing a second binder on the other side surface of the insulating layer;
(3) further comprising: preparing the first carbon glue layer on the surface of the positive electrode conductor layer, and preparing the second carbon glue layer on the surface of the negative electrode conductor layer.

14. A battery cell, **characterized by** comprising at least one composite electrode sheet, wherein the composite electrode sheet is the composite electrode sheet according to any one of claims 1 to 8, or the composite electrode sheet prepared and obtained by the preparation method according to any one of claims 9 to 13,
wherein the composite electrode sheet forms the battery cell in a stacked or wound structure;
the stacked structure at least comprises a wound and stacked structure; and
the wound structure at least comprises at least one of a square, wound, and cylindrical structures.

15. A preparation method for the battery cell according to claim 14, **characterized by** comprising a step of:
assembling the composite electrode sheets with a separator and stacking or winding them to form the battery cell,
wherein the battery cell comprises at least one of the wound and stacked structure, the wound structure, the cylindrical structure, and the square.

16. The preparation method for the battery cell according to claim 15, wherein the preparation method for the battery cell with the wound and stacked structure specifically comprises:
placing a plurality of composite electrode sheets on the separator, wherein the separator comprises, in sequence along its length direction, a first reserved separator, an electrode sheet receiving area, and a second reserved separator; the plurality of composite electrode sheets are located within the electrode sheet receiving area; the positive electrode material layers of any two adjacent composite electrode sheets have opposite orientations, a length direction of the plurality of composite electrode sheets is the same as that of the separator, and the plurality of the composite electrode sheets are arranged in a row along the length direction of the separator; using the first reserved separator to wrap a first composite electrode sheet adjacent to the first reserved separator; and initiating winding and stacking from the first composite electrode sheet wrapped by the first reserved separator, proceeding sequentially towards the second reserved separator, to obtain the battery cell with the wound and stacked structure, wherein in the battery cell with the wound and stacked structure, the plurality of composite electrode sheets are stacked.

17. The preparation method for the battery cell according to claim 15, wherein the preparation method for the battery cell with the wound structure specifically comprises:
stacking the composite electrode sheets on a top of the separator, wherein the length direction of the composite electrode sheets is the same as the length direction of the separator; and initiating winding the composite electrode sheets from one end of the separator to form the battery cell with the wound structure.

18. The preparation method for the battery cell according to claim 15, wherein the battery cell with the cylindrical structure comprises a battery cell body structure, a first external conductor, and a second external conductor,
wherein a preparation method for the battery cell body structure specifically comprises:
placing a plurality of composite electrode sheets on the separator, wherein the separator comprises, in sequence along its length direction, a first reserved separator, an electrode sheet receiving area, and a second reserved separator; the plurality of composite electrode sheets are located within the electrode sheet receiving area; the positive electrode material layers of any two adjacent composite electrode sheets have opposite orientations; a length direction of the plurality of composite electrode sheets is the same as that of the separator, and the plurality of composite electrode sheets are arranged in a row along a length direction of the separator; using the first reserved separator to wrap a first composite electrode sheet adjacent to the first reserved separator ; and initiating winding and stacking from the first composite electrode sheet wrapped by the first reserved separator, proceeding sequentially towards the second reserved separator, to obtain the battery cell body structure, wherein in the battery cell body structure, the plurality of composite electrode sheets are stacked,
wherein the first external conductor and the second external conductor are respectively located on both sides of the battery cell, and are arranged face-to-face; the length directions of the first external conductor and the second external conductor are both the same as a stacking direction of the composite electrode sheets, wherein on one side of the battery cell, a first reserved area in the positive electrode conductor layer forms a bend area and is connected to the first external conductor; and on the other side of the battery cell, a second reserved area in the negative electrode conductor layer forms a bend area and is connected to the second external conductor.
